Europäisches Patentamt

European Patent Office

Office européen des brevets

(19)

(11) Veröffentlichungsnummer: **0 156 332**
**A2**

(12) # EUROPÄISCHE PATENTANMELDUNG

(21) Anmeldenummer: **85103439.7**

(51) Int. Cl.⁴: **A 01 D 87/12**

(22) Anmeldetag: **23.03.85**

(30) Priorität: **24.03.84 DE 3411030**

(43) Veröffentlichungstag der Anmeldung:
**02.10.85 Patentblatt 85/40**

(84) Benannte Vertragsstaaten:
**AT BE CH DE FR GB IT LI NL SE**

(71) Anmelder: **Holmer, Alfons**
**Regensburger Strasse 18**
**D-8301 Eggmühl(DE)**

(72) Erfinder: **Holmer, Alfons**
**Regensburger Strasse 18**
**D-8301 Eggmühl(DE)**

(74) Vertreter: **Wasmeier, Alfons, Dipl.-Ing. et al,**
**Patentanwälte Dipl.-Ing. A.Wasmeier Dipl.-Ing. H.Graf**
**Postfach 382 Greflinger Strasse 7**
**D-8400 Regensburg 1(DE)**

(54) **Ballendrahtschneider.**

(57) Zum maschinellen Durchtrennen von Bindedrähten an Ballengut wird ein Gerät vorgeschlagen, das auf einer Grundplatte Aufnahmevorrichtungen für Hubarme eines Hebezeuges, eine horizontale Achse drehbar gelagerte Fanghaken zur Aufnahme jeweils eines Bindedrahtes und eine Schneidanordnung, die die gefangenen Drähte durchschneidet, aufweist. Die Fanghaken sind in Lagerstellen der Grundplatte gelagert und erstrecken sich durch Aussparungen der Grundplatte. Sie sind am einen Ende fest miteinander verbunden und symmetrisch zur Mittelachse drehbar, und zwar zwei Fanghaken eines Paares in entgegengesetzter Richtung. Die Betätigung der Fanghaken erfolgt durch Seilzug oder Gestänge, über Druckzylinder oder durch elektromechanischen Antrieb. Bei einer anderen Ausgestaltung des Gerätes sind zwei miteinander gekoppelte, relativ zueinander verschiebbare parallele Längsarme vorgesehen, deren einer den einen Teil und deren anderer den anderen Teil der Klemm- und Schneidvorrichtung aufweist. Die beiden Teile der Schneidvorrichtung werden hierbei durch einen Druckzylinder betätigt, der über eine Federvorrichtung gespannt wird.

./...

Fig. 1

Die Erfindung bezieht sich auf eine Vorrichtung zum Durchtrennen von Bindedrähten an Ballen, wie z.B. Strohballen oder ähnlichem zu Ballen gepreßtem Gut.

Die beim Ernten von Getreide anfallenden Strohballen oder dergl. werden üblicherweise in der Ballenpresse mit relativ starkem Draht bzw. Drahtband gebunden, z.B. in Form von vier im Abstand voneinander angeordneten Schleifen. Soll der Ballen verbraucht werden, müssen diese Drähte bzw. Drahtbänder durchschnitten werden. Dieses Durchschneiden erfolgt bisher von Hand mit Hilfe von Drahtscheren, so daß jeder Ballen bei vier Drahtschleifen von Hand viermal geschnitten werden muß. Da bedingt durch das verhältnismäßig hohe Ballengewicht die Bindedrähte einen relativ großen Durchmesser haben und der Schneidvorgang pro Ballen in jedem Falle mehrmals durchgeführt werden muß, ist eine derartige Methode außerordentlich kraftaufwendig und mühsam sowie arbeitsintensiv.

Aufgabe der Erfindung ist es, diese bisher von Hand vorgenommene Arbeit des Durchschneidens der Drähte am Ballen auf maschinellem Wege durchzuführen und eine Vorrichtung zu schaffen, mit der alle Drähte eines Ballens (auf einer Ballenseite) gleichzeitig z.B. von einem Schlepper oder einem anderen Hebezeug aus, mit dem der Ballen aus einem Stapel entnommen wird, durchtrennt werden können.

Gemäß der Erfindung wird dies mit den Merkmalen des Kennzeichens des Anspruches 1 bzw. des Kennzeichens des Anspruches 7 erreicht. Weitere Ausgestaltungen der Erfindung sind Gegenstand der Unteransprüche.

Die Vorrichtung nach der Erfindung wird z.B. mit der Frontladergabel eines Schleppers an hierfür vorgesehenen Traglaschen oder Flanschen aus einem Stapel erfaßt und an der Frontladergabel hängend auf einen Ballen so aufgesetzt, daß die Fanghaken der Vorrichtung an den Drähten auf der Ballenoberseite anliegen. Dann werden die Fanghaken, die mittels Gestänge miteinander bzw.

jeweils zu zweien verbunden sind, durch Betätigung dieses Gestänges, z.B. über Seilzug, Gestänge, Hydraulikzylinder, Getriebemotor oder dergl. um ihre horizontale Achse gedreht, derart, daß das freie Ende bzw. das Fangende der Fanghaken sich unter den jeweiligen Draht schiebt, diesen Draht fängt und spannt. Anschließend wird die Frontladergabel mit dem Ballen an den nunmehr gefangenen Drähten angehoben, wobei das gesamte Gewicht des Ballens von den Fanghaken aufgenommen wird. In dieser Position kann der Schlepper mit dem angehobenen Ballen zu einer Abwurfstelle verfahren werden. An der Abwurfstelle wird bei angehobenem Ballen die Schneidvorrichtung betätigt, z.B. ebenfalls über Seilzug, Gestänge, Hydraulikzylinder, Getriebemotor oder dergl., indem die beweglichen Messer auf die feststehenden Messer zu bewegt werden. Jedes Paar aus feststehenden und beweglichen Schneidmessern ist in bezug auf den zugehörigen Fanghaken so angeordnet, daß der vom Fanghaken aufgenommene Draht am oder in unmittelbarer Nähe des feststehenden Messers liegt, gegen das das bewegliche Messer zur Durchführung des Schneidvorganges bewegt wird.

Die beweglichen Schneidmesser können entweder alle auf einmal oder in Gruppen gleichzeitig relativ zu den festen Schneidmessern bewegt werden, wobei bei einer getrennten Betätigung von Paaren von Schneidmessern der Aufwand getrennter Antriebe erforderlich ist. Dies gilt analog auch für die Betätigung der Fanghaken. Die beweglichen Schneidmesser werden nach Ausführung des Schneidvorganges durch eine Rückstellfeder wieder in die Ausgangsposition zurückgeführt, so daß sie für den nächsten Schneidvorgang bereit sind. In entsprechender Weise ist auch eine Rückstellfeder zur Rückstellung der Fanghaken in die Ausgangsstellung vorgesehen, wobei die Fanghaken den abgeschnittenen Draht solange festhalten, bis der Ballen von der Vorrichtung gelöst ist, damit die an den Fanghaken eingespannten Drähte an einer anderen Stelle abgeworfen werden können.

Anstatt Fanghaken und Schneidmesser getrennt voneinander auszugestalten, kann die Anordnung auch so gewählt werden, daß der Fanghaken im betätigten Zustand als festes Schneidmesser ausgebildet ist, das mit dem beweglichen Schneidmesser zusammenwirkt

3  0156332

und den Amboß für das bewegliche Schneidmesser darstellt. Auch kann anstelle hin- und hergehender beweglicher Schneidmesser, die mit festen Schneidmesern zusammenwirken, eine andere, an sich bekannte Schneidvorrichtung gewählt werden, z.B. in Form von rotierenden Schneidmessern.

Bei einer weiteren Ausgestaltung der Erfindung wird die Vorrichtung z.B. mit der Frontladergabel eines Schleppers an hierfür vorgesehenen Traglaschen oder Flanschen von Aufnahmeträgern erfaßt und an der Frontladergabel hängend auf einen Ballen so aufgesetzt, daß die hakenförmigen Klemm- und Schneidelemente im Bereich der Bindedrähte liegen und nach Art von Fanghaken bei einer Betätigung unter die Bindedrähte greifen. Die Betätigung, d.h. das Schließen der Klemm- und Schneidelemente erfolgt in der Weise, daß ein Druckzylinder, z.B. ein Hydraulikzylinder ausgefahren wird, der die beiden die Klemm- und Schneidelemente aufnehmenden Längsarme so gegeneinnder verschiebt, daß die Elemente aufeinander zu bewegt, vorzugsweise gedreht werden, und jeweils zwei miteinander eine Klemm- und Schneidvorrichtung ergebende Elemente einen Draht aufnehmen. Bei ausgefahrenem Zylinder ist die Position der Klemm-und Schneidelemente so ausgelegt, daß der Draht an einer speziell vorgenommenen Stelle der beiden Elemente festgeklemmt wird. In diesem Zustand ist die Klemmvorrichtung am Ballen fixiert, der Ballen wird mit dem Hebezeug an den Bindedrähten hochgehoben und an die Stelle gebracht, an der das Ballengut benötigt wird. Das Gewicht des Ballens wird dabei von der Klemm- und Schneidvorrichtung aufgenommen. Zugleich mit dem Ausfahren des Druckzylinders wird von diesem Druckzylinder eine zwischen Zylinder und Rahmen angeordnete Kraftfeder gespannt. An der gewünschten Abwurfstelle wird durch Fernbetätigung, z.B. über Seilzug vom Schlepper oder vom Boden aus, die gespannte Feder entriegelt. Durch die freiwerdende Energie wird der die Schneid- und Klemmelemente aufnehmende Längsarm beschleunigt und durchtrennt den Bindedraht. Diese Bewegung wird durch einen starr mit dem Rahmen verbundenen Gegenanschlag begrenzt bzw. aufgefangen. Die abgeschnittenen Drähte bleiben eingespannt, der Ballen fällt durch sein Gewicht zu Boden und zerfällt. Eine Rückstellfeder

0156332

führt, wenn der Druckzylinder entlastet wird, die beiden Längsarme mit den Klemm- und Schneidelementen wieder in die Ausgangsstellen zurück, in der die Schneidvorrichtung geöffnet ist.

Mit der Erfindung wird eine kompakte Klemm- und Schneidvorrichtung geschaffen, die ein sicheres und einwandfreies Durchtrennen der Drähte mit relativ geringem Aufwand gewährleistet. Die Betätigung der Klemm- und Schneidvorrichtung erfolgt mit Hilfe eines einzigen Arbeitszylinders in Verbindung mit einer eine Schlagwirkung für den Schneidvorgang ausübenden Kraftfeder, die durch den Arbeitszylinder gespannt wird und die durch eine Auslösevorrichtung ihre kinetische Energie freisetzt.

Nachstehend wird die Erfindung anhand von Ausführungsbeispielen in Verbindung mit den Zeichnungen erläutert. Es zeigt:

Fig. 1 eine perspektivische Darstellung einer Ausführungsform der Vorrichtung nach der Erfindung,

Fig. 2 eine Seitenansicht der Schneidmesseranordnung,

Fig. 3 eine Seitenschnittansicht der Fanghakenanordnung,

Fig. 4 eine Stirnansicht in Pfeilrichtung nach Fig. 1,

Fig. 5 eine perspektivische Gesamtansicht einer weiteren Ausführungsform eines Ballendrahtschneiders nach der Erfindung,

Fig. 6 eine Seitenansicht des Ballendrahtschneiders nach Fig. 5,

Fig. 7 eine Darstellung eines Klemm- und Schneidelementpaares des Ballendrahtschneiders nach Fig. 5, mit Anlenkung und in Seitenansicht,

Fig. 8 eine Vorderansicht der Darstellung nach Fig. 7, und

Fig. 9 eine Darstellung der Auslöser- und Anschlagvorrichtung des Ballendrahtschneiders nach Fig. 5.

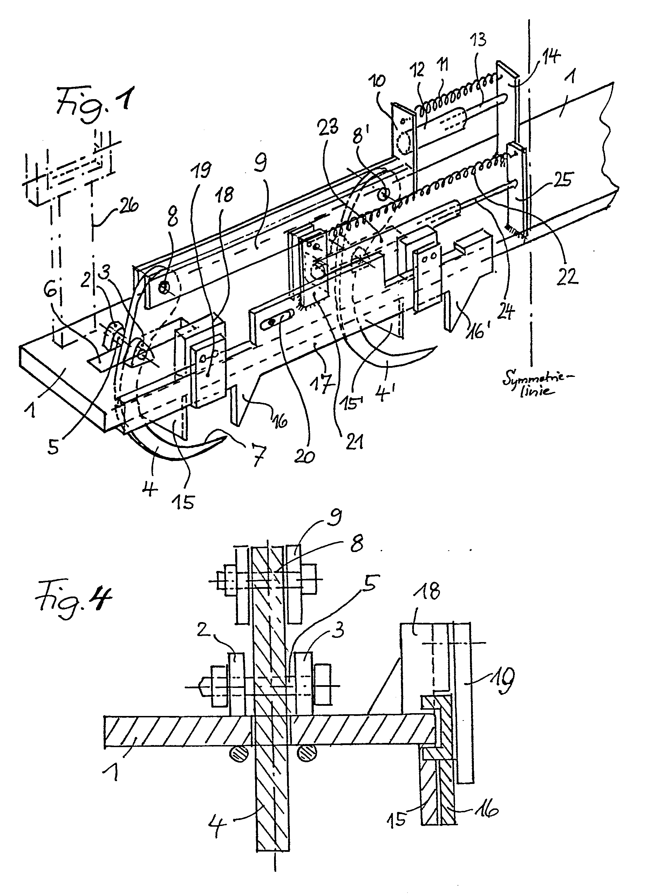

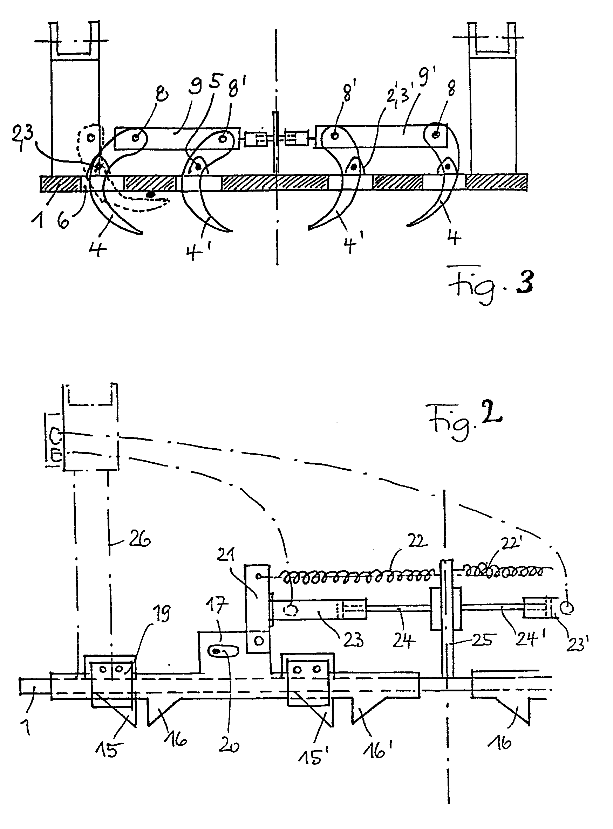

Die dargestellte Ausführungsform nach den Figuren 1 - 4 betrifft einen vier Fanghaken und vier Schneidstellen aufweisenden Ballendrahtschneider, wobei jeder Fangvorrichtung eine Schneidstelle zugeordnet ist, und die Anordnung aus Fangvorrichtung und Schneidstelle jeweils gleich ausgebildet ist. Aus diesem Grunde ist in der Zeichnung eine Symmetrielinie dargestellt, um anzudeuten, daß die Vorrichtung auf beiden Seiten der Symmetrielinie gleich ausgebildet ist und nur eine dieser beiden Seiten in der Zeichnung dargestellt ist. Die Trägerplatte 1 weist pro Arbeitsstelle einen Flansch 2, 3 zur gelenkigen Aufnahme eines Fanghakens 4 auf, der in der Gelenkachse 5 horizontal beweglich angeordnet ist. Der Fanghaken 4 ist dabei durch eine Aussparung 6 in der Trägerplatte geführt und kann von der fest ausgezogenen Position (geöffnet) in die gestrichelt ausgezogene Position (geschlossen) gedreht werden. Die Fangfläche 7 ist dabei so ausgebildet, daß sie in geschlossener Position des Fanghakens etwa parallel zur Unterseite der Trägerplatte liegt, wie in Fig. 1 gestrichelt dargestellt.

Das entgegengesetzte Ende des Fanghakens 4 ist an einer Gelenkstelle 8 mit einer Betätigungsstange oder Betätigungsschiene befestigt, die von der Gelenkstelle 8 zu der Gelenkstelle 8´ des benachbarten Fanghakens 4´ führt, so daß die Fanghaken 4 und 4´ eine gemeinsame Bewegung ausführen. Es it zweckmäßigerweise eine Doppelschiene zu beiden Seiten der Fanghaken vorgesehen, damit bei einer Betätigung der Fanghaken kein Verkanten eintreten kann. Die Fanghaken 4, 4´ sind über an den Gelenkstellen 8, 8´ befestigte Betätigungsschienen oder Betätigungsstangen 9 miteinander verbunden, die vorzugsweise doppelseitig ausgebildet sind, um eine einseitige Beanspruchung der Fanghaken bei der Betätigung auszuschalten. Die Tragschiene 9 weist einen Anschlußsteg 10 auf, mit dem ein Ende einer Rückholfeder 11 und ein Druckzylinder 12 befestigt sind. Das andere Ende der Rückholfeder 11 und die Kolbenstange 13 des Druckzylinders sind mit einem auf der Trägerplatte 1 starr befestigten Steg 14 festgelegt. Beim Ausfahren des Druckzylinders dient somit der Steg 14 als stationärer Anschlag.

Die Schneidvorrichtung besteht aus vier starren und vier beweglichen Messerelementen. Die starren Messerelemente 15, 15´ sind seitlich an der Trägerplatte 1 befestigt oder einstückig mit der Trägerplatte ausgebildet, die beweglichen Schneidmesser 16 sind an einem schienenartigen Aufnahmeteil 17 vorgesehen und vorzugsweise einstückig mit diesem ausgebildet. Das schienenartige Aufnahmeteil 17 umschließt die seitliche Begrenzung der Trägerplatte so, daß das Aufnahmeteil 17 an der Trägerplatte 1 in dessen Längsachse beweglich ist. Damit werden das Aufnahmeteil 17 und die beweglichen Messer mit der Trägerplatte über starre Führungen 18 und Führungslaschen 19 geführt. Im Aufnahmeteil 17 ist eine Langlochführung 20 zur Längsverstellung des schienenartigen Aufnahmeteiles 17 angeordnet, um eine Verstellung der beweglichen Messer 16 zu erreichen. Am Aufnahmeteil 17 sind Stege 21 befestigt, an denen ein Ende einer Rückholfeder 22 und ein Druckluftzylinder 23 befestigt sind. Das entgegengesetzte Ende der Rückholfeder 22 sowie die Kolbenstange 24 sind an einem auf der Trägerplatte 1 befestigten Steg 25 befestigt, der ähnlich dem Steg 14 als fester Anschlag dient, um die beweglichen Messer 16, 16´ auf die feststehenden Messer 15, 15´ zu zu bewegen bzw. um die beweglichen Messer nach erfolgter Schneidbetätigung von den feststehenden Messern abzuziehen. Die Führungslaschen 19 sind lösbar ausgebildet, um ein Auswechseln der beweglichen Schneidmesser bzw. des Aufnahmeteiles 17 zu ermöglichen.

Auf der Trägerplatte 1 sind am vorderen und am hinteren Ende jeweils Träger 26 befestigt, die zur Aufnahme der Haken oder Aufnahmeglieder eines Hebezeuges, z.B. der Gabelarme eines Schleppers dienen, und die auch die Anschlußschläuche, Ventile usw. zur Betätigung der Druckzylinder aufnehmen. Diese Träger sowie die Aufnahmeelemente für das Hebezeug sind nicht Gegenstand vorliegender Anmeldung und gehören zum Stande der Technik.

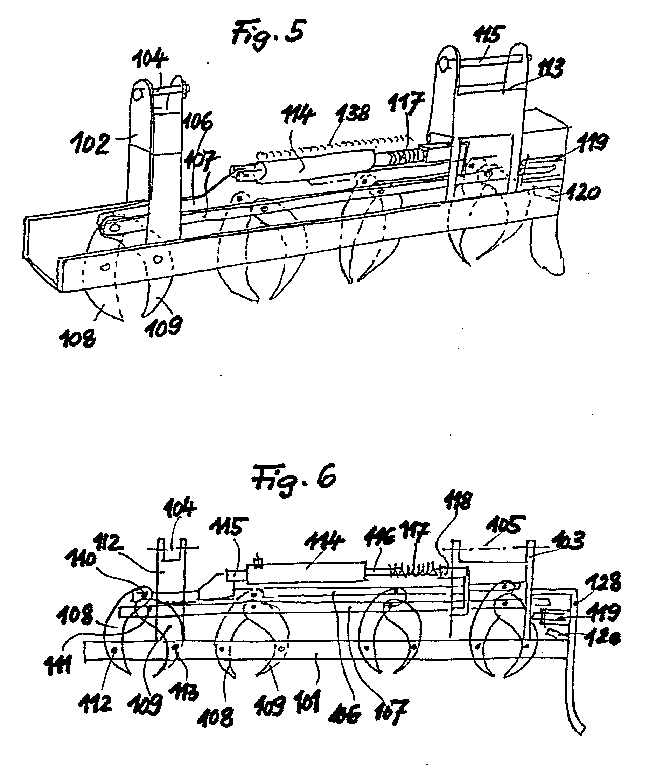

Der Ballendrahtschneider nach der in den Figuren 5 - 9 gezeigten Ausführungsform weist einen Rahmen 101, z.B. in Form einer U-Schiene, mit Tragschienen 102 und 103 im Bereich der Endbegrenzungen des Rahmens 101 auf. Die Tragschienen 102, 103 dienen zur Aufnahme der Vorrichtung durch ein Hebezeug, z.B. die Aufnahmearme einer Frontladergabel eines Schleppers, und zwar über Bolzen 104 und 105. Parallel zum Rahmen 101 sind zwei voneinander getrennte, gegeneinander und relativ zum Rahmen 101 verschiebbare, parallele Längsschienen 106, 107 vorgesehen, die die einzelnen Klemm- und Schneidelemente 108, 109 gelenkig aufnehmen und über diese Elemente mit dem Rahmen 101 gelenkig verbunden sind. Die Gelenkstellen sind mit 110, 111, 112 und 113 bezeichnet. Alle Klemm- und Schneidelemente 108 sind mit der Längsschiene 106, alle Klemm- und Schneidelemente 109 mit der Längsschiene 107 verbunden. Jeweils ein Klemm- und Schneidelement 108 wirkt mit einem zugeordneten Klemm- und Schneidelement 109 zusammen; ein solches Elementenpaar bildet eine Schneidvorrichtung. Bei der Gesamtvorrichtung nach der Erfindung sind vier derartige Klemm- und Schneidelementenpaare vorgesehen. Bei der dargestellten Vorrichtung sind die Klemm- und Schneidelemente 108 und 109 so angeordnet, daß ihre freien Enden aufeinander zu und in geringem Abstand aneinander vorbei bewegt werden, wenn die Schiene 106 nach links und die Schiene 107 nach rechts bewegt wird. Diese Bewegung erfolgt z.B. mit Hilfe eines Druckzylinders 114, der vorzugsweise an den Hydraulikkreis des Schleppers angeschlossen ist, und dessen festes Ende bei 115 mit der Längsschiene 106 befestigt ist. Die Kolbenstange 116 des Druckzylinders 114 ist unter Zwischenschaltung einer Kraftfeder 117 über ein Anschlußteil 118 mit der Längsschiene 107 befestigt. Der Druckzylinder 114 fährt bei Betätigung aus, spannt die Feder 117 und bewegt gleichzeitig die Längsschienen 106 und 107 auseinander, derart, daß die freien Enden der Klemm- und Schneidelemente 108, 109 sich soweit überlappen, daß der zu klemmende und zu schneidende Draht in einer definierten Position eingeklemmt wird. In dieser Position steht das äußerste rechte (in Fig. 6) Klemm-und Schneidelement 109 an einer Auslöseverriegelung 119 für die Feder 117 an. Wird die Auslöseverriegelung 119 freigegeben, wird die Feder 117 schlagartig entspannt und die Längsschiene 107 entsprechend der hohen Federkraft um eine kleine Strecke nach rechts bewegt, die so bemessen ist, daß das Element 109 gegenüber dem Element 108 eine zum Durchtrennen des Drahtes erforderliche Bewegung ausführt. Eine weitergehende Bewegung wird durch einen am Rahmen 101 befestigten Gegenanschlag 120 unterbunden.

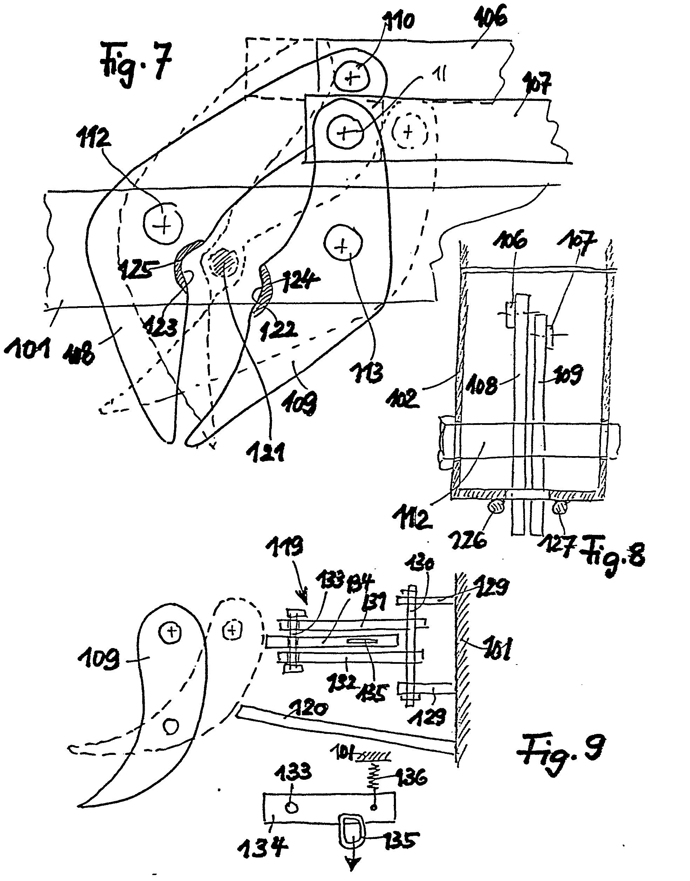

In Fig. 7 ist ein Elementenpaar aus Trenn- und Schneidelementen 108, 109 vergrößert dargestellt. Diese beiden Elemente bilden zusammen eine Klemm- und Schneidvorrichtung. Die Elemente sind hakenförmig ausgebildet und überlappen einander zur Durchführung des Klemm- und Schneidvorganges soweit (gestrichelt in Fig. 7 dargestellt), daß der Bindedraht 121 in einer durch die Aussparungen 123 und 124 gebildeten Öffnung festgelegt ist. An den Aussparungen 123, 124 weisen die beiden Elemente 108, 109 einen Hartmetallauftrag 124, 125 auf; der Auftrag 124 ist z.B. als Schneide und der Auftrag 125 als Schneidenauflage ausgebildet. Mit 126 und 127 sind den Schneidelementen zugeordnet am Rahmen 101 angeschweißte Stäbe dargestellt, an die der Bindedraht bei geöffneten Schneidelementen 108, 109 angelegt wird und die den Bindedraht zum Klemmen und Abschneiden verbiegen, so daß der Draht nach Beendigung des Schneidvorganges nicht nach unten fällt, sondern gehalten wird.

Die Auslöse- und Verriegelungsvorrichtung 119 ist an einem Rahmenteil 128 über Ösen 129 befestigt, die einen Drehbolzen 130 aufnehmen, an dem zwei parallel zueinander angeordnete Flacheisen 131, 132 angelenkt sind, die an ihrem entgegengesetzten Ende mit einem Bolzen 133 verbunden sind. Der Bolzen 133 nimmt das Anschlagglied 134 auf, das am (äußersten rechten in Fig. 6) Klemm- und Schneidelement 109 anliegt, wenn die Feder 117 gespannt ist. Wird ein Auslöseelement 135 am Anschlagglied 134 betätigt, z.B. über einen Seilzug, wird das Anschlagglied 134 aus der Anlage mit dem Element um den Bolzen 133 gedreht, und die Feder 117 übt auf das Anschlagglied 134 in Schneidrichtung eine Schlagwirkung aus, die das Durchtrennen des Drahtes 121 bewirkt. Auf der dem Auslöseelement 135 entgegengesetzten Seite greift eine am Rahmen 101 festgelegte Feder 136 an, die das Anschlagglied 134 in der Betriebsposition hält, in der sein äußeres Ende 137 mit dem Element 109 in Eingriff steht. Der Festanschlag 120 begrenzt nach erfolgter Freigabe der Feder 117 durch Betätigen des Anschlaggliedes 134 den Weg des Elementes 109.

Patentansprüche:                    **0156332**

1. Vorrichtung zum Durchtrennen von Bindedrähten an Ballen, z.B. Strohballen, mit Hilfe von Schneidvorrichtungen, **gekennzeichnet durch** eine Grundplatte (1) mit Aufnahmevorrichtungen (26) für die Hubarme eines Hebezeuges, z.B. die Frontladergabel eines Schleppers, an der Grundplatte (1), um eine horizontale Achse drehbar gelagerte Fanghaken (4, 4´) zur Aufnahme jeweils eines Bindedrahtes, die vorzugsweise als greiferartige Zangenelemente ausgebildet sind, eine an der Grundplatte befestigte Schneidanordnung (15, 15´, 16, 16´), die die von den Fanghaken (4, 4´) gefangenen Drähte durchschneidet, und Aussparungen (6) in der Grundplatte, durch die hindurch sich die Fanghaken (4, 4´) erstrecken und zu deren beiden Seiten auf der Grundplatte (1) Lagerstellen (2, 3) für die Fanghaken vorgesehen sind, welche an dem zum Fangende entgegengesetzten Ende miteinander fest verbunden und gemeinsam betätigbar sind.

2. Vorrichtung nach Anspruch 1, dadurch gekennzeichnet, daß die Fanghaken (4, 4´) so angeordnet und gelagert sind, daß sie symmetrisch zur Mittelachse drehbar sind, insbes. die eine Hälfte der Fanghaken im Uhrzeigersinn und die andere Hälfte entgegen dem Uhrzeigersinn drehbar ist.

3. Vorrichtung nach Anspruch 1 oder 2, dadurch gekennzeichnet, daß zur Drehung der Fanghaken in die Betätigungsposition wahlweise ein Seilzug- oder Gestängeantrieb bzw. einen Druckzylinderantrieb bzw. ein kombinierter elektromechanischer Antrieb mit Getriebemotor vorgesehen ist.

4. Vorrichtung nach einem der Ansprüche 1 - 3, gekennzeichnet durch Rückstellfedern zum selbsttätigen Zurückführen der Fanghaken aus der Betätigungsposition in die Ausgangsposition nach Beendigung des Schneidvorganges.

5. Vorrichtung nach einem der Ansprüche 1 - 4, dadurch gekennzeichnet, daß die Schneidanordnung (15, 16, 15´, 16´) aus Paaren von miteinander zusammenwirkenden Schneidmessern besteht, daß die feststehenden Schneidmesser bzw. Ambosse integraler Bestandteil der Trägerplatte (1) sind, und daß die beweglichen Schneidmesser an der Trägerplatte auf die festen Schneidmesser zu und von ihnen weg verschiebbar angeordnet sind.

6. Vorrichtung nach Anspruch 5, dadurch gekennzeichnet, daß die beweglichen Schneidmesser wahlweise durch Seilzug- oder Gestängeantrieb mittels Nocken und Kurven oder durch Druckzylinderantrieb  mit Hilfe eines elektromechanischen Antriebes, z.B. mit Getriebemotor, relativ zu den starren Schneidmessern betätigbar sind.

7. Vorrichtung zum Durchtrennen von Bindedrähten an Seilen, z.B. Strohballen, mit Hilfe von Schneidvorrichtungen, gekennzeichnet durch einen Rahmen (101) mit Aufnahmeträgern (102, 104) für die Hubarme eines Hebezeuges, z.B. der Frontladergabel eines Schleppers, zwei miteinander gekoppelte, relativ zueinander verschiebbare parallele Längsarme (106, 107), deren einer den einen Teil (108) der Klemm- und Schneidvorrichtung (108, 109) und deren anderer den anderen Teil (109) der Klemm- und Schneidvorrichtung (108, 109) aufweist, einen am einen Ende mit dem einen Längsarm und am anderen Ende mit dem anderen Längsarm fest verbundenen Druckzylinder (114) zur Betätigung der beiden Teile der Schneidvorrichtung (108, 109), und eine Federvorrichtung (117), die vom Druckzylinder (114) gespannt wird und die den eigentlichen Schneidvorgang am Bindedraht (121) bewirkt, wenn die Feder (117) freigegeben wird.

8. Vorrichtung nach Anspruch 7, dadurch gekennzeichnet, daß jede Klemm- und Schneidvorrichtung (108, 109) aus zwei hakenförmigen Klemm- und Schneidelementen (108, 109) besteht, die gemeinsam aufeinander zu und voneinander weg bewegbar ausgebildet und angeordnet sind, die beide auf unterschiedlichen Längsarmen

(106, 107) gelenkig gelagert sind, und die beide miteinander so zusammenwirken, daß der Bindedraht (121) von ihnen aufgenommen, in geschlossenem Zustand der Klemm- und Schneidvorrichtung festgelegt und in einem abschließenden Schritt durch Auslösen der Spannfeder (117) durchtrennt wird.

9. Vorrichtung nach Anspruch 7 oder 8, dadurch gekennzeichnet, daß die Klemm- und Schneidelemente (108, 109) hakenförmige Elemente sind, die so ausgebildet und gelagert sind, daß sie scherenartig miteinander zusammenwirken, daß die hakenförmigen Elemente (108, 109) zur Durchführung des Schneidvorganges jeweils einander überlappend ausgebildet sind und einander zugewandte Drahtfangstellen (122, 123) aufweisen, in denen der durchzutrennende Bindedraht (121) festgeklemmt wird, daß diese Drahtfangstellen jeweils eine Stelle (124, 125) aus gehärtetem Metall aufweisen, an der bei Auslösung des Trennschnittes ein Abscheren des Drahtes erfolgt, und daß mit den Klemm- und Schneidelementen (108, 109) eine Rückstellfeder (138) verbunden ist.

10. Vorrichtung nach einem der Ansprüche 7, 8 oder 9, dadurch gekennzeichnet, daß eine Verriegelungs- und Auslösevorrichtung (119) vorgesehen ist, die bei Entriegelung die Druckfeder (117) freigibt und die die dadurch entstehende schlagartige Federkraft auf die Elemente (109) zur Durchführung des Schneidvorganges überträgt, und daß der Veriegelungs- und Auslösevorrichtung (119) ein Gegenanschlag (120), der als Festanschlag ausgebildet ist, zugeordnet ist, der die Bewegung der Elemente (109) begrenzt.

Fig.1

Symmetrielinie

Fig.4

Fig. 3

Fig. 2

Fig. 5

Fig. 6

0156332

4/4

Fig. 7

Fig. 8

Fig. 9